# EUROPEAN PATENT SPECIFICATION

(11) **EP 4 491 941 B1**
(45) Date of publication and mention of the grant of the patent: **18.02.2026**
(21) Application number: 24187298.5
(22) Date of filing: 09.07.2024
(51) Int. Cl.: F21S 43/237, F21S 43/239, F21S 43/243, F21S 43/245, F21S 43/247, F21S 43/251, F21S 43/235

(54) **SIGNALING DEVICE FOR A VEHICLE, IN PARTICULAR A MOTOR VEHICLE**
SIGNALEINRICHTUNG FÜR EIN FAHRZEUG, INSBESONDERE EIN KRAFTFAHRZEUG
DISPOSITIF DE SIGNALISATION POUR UN VÉHICULE, EN PARTICULIER UN VÉHICULE AUTOMOBILE

(30) Priority: 14.07.2023 IT 202300014820
(43) Date of publication of application: 15.01.2025
(73) Proprietor: Marelli Automotive Lighting Italy S.p.A. Con Socio Unico, 10078 Venaria Reale (TO) (IT)
(72) Inventor: VAIRA, Alessandro, 10078 VENARIA REALE (TO) (IT); REGAZZONI, Manuel, 10078 VENARIA REALE (TO) (IT); CLERICI, Francesca, 10078 VENARIA REALE (TO) (IT)
(74) Representative: Novagraaf Group

(56) References cited:
- EP-A1- 3 869 089
- DE-A1- 102017 128 841
- JP-A- 2017 183 231
- US-A1- 2020 391 657
- US-A1- 2023 160 555

## Description

### Cross-reference to related applications

This patent application claims priority from Italian patent application no. 102023000014820 filed on July 14, 2023.

### Technical field

The present invention refers to a signaling device for a vehicle, in particular a motor vehicle.

### Background of the invention

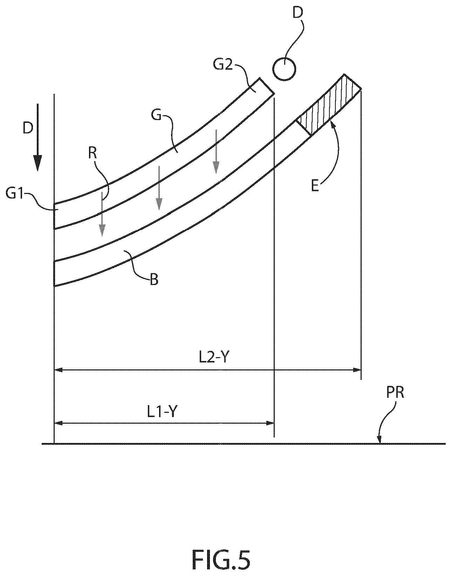

Signaling devices for a vehicle, in particular a motor vehicle, are known, comprising (see Figure 5 illustrating the prior art): an elongated light guide G which extends between a first end portion G1 and a second end portion G2; a light-emitting device D (typically a LED device) coupled to an end portion of the light guide and configured to illuminate the light guide; and an elongated planar guide B arranged facing the elongated light guide and configured to receive the light rays emitted from the light guide and convey the light on a surface E of the bar arranged, in use, towards the outside of the vehicle.

In particular, on a projection plane PR perpendicular to a longitudinal axis D of the vehicle on which, in use, the device is installed, the following can be defined:
a first apparent distance L1-y which extends between two straight lines perpendicular to the projection plane PR and passing through the end portions of the light guide G; and
a second apparent distance L2-y which extends between two straight lines perpendicular to the projection plane PR and passing through the end portions of the planar light guide B;
In some applications, the second apparent distance L2-y is greater than the first apparent distance L1-y.

In such a case, the light produced by the light guide G projected onto the plane PR extends only along the first apparent distance L1-y, and the outer surface of the planar light guide is not perceived totally illuminated.
However, in some technical applications, it may be useful to provide for a waveguide in which the distance L1-y is smaller than the distance L2-y and nonetheless obtain the constant illumination of the planar light guide.

US 2020/391657 Al discloses an example of a known signaling device for a vehicle.

### Subject matter of the invention

The object of the present invention is to manufacture a signaling device of the type mentioned above which allows for a complete illumination of the planar light guide even when the apparent distance L1-y is smaller than the apparent distance L2-y.

### Object of the present invention

The above object is achieved by the present invention since it relates to a signaling device for a vehicle of the type described by claim 1.

### Description of the figures

The invention will be illustrated with reference to the accompanying figures, wherein:
Figure 1 illustrates a top view of a signaling device for a vehicle, in particular a motor vehicle manufactured according to the teachings of the present invention;
Figure 2 illustrates, on an enlarged scale, a portion of the device of Figure 1;
Figure 3 illustrates a cross-section of the device of Figure 1;
Figure 4 illustrates a (preferred) front view of the device in operation (turned on) according to the present invention; and
Figure 5 schematically illustrates the prior art.

### Preferred description of the invention

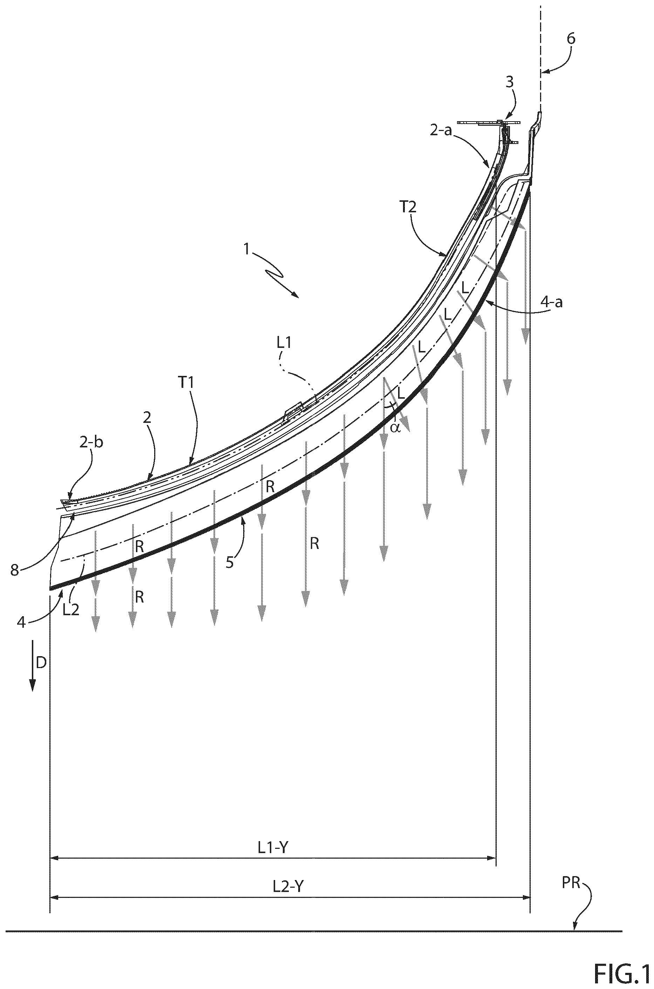

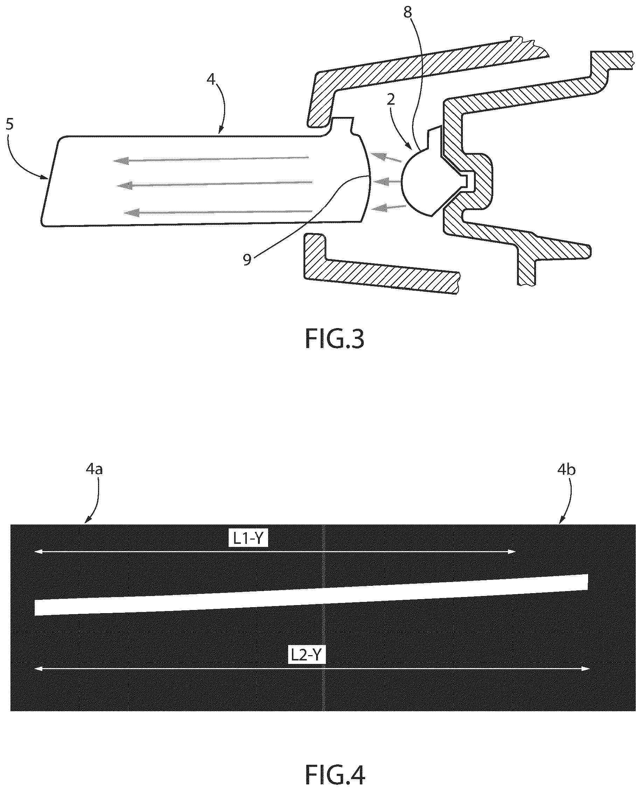

With reference to Figure 1, reference number 1 indicates a signaling device for a vehicle, in particular a motor vehicle, comprising:
- a primary emitting device, in particular an elongated light guide 2, which extends between a first end portion 2-a and a second end portion 2-b along an optically active curved path L1 (optically active path means the portion of the elongated light guide 2 provided with optical devices adapted to produce an output light beam from the light guide 2):
   - at least one light-emitting device 3 (for example, an LED diode arranged on a support - of known type) coupled to an end portion (in the example, 2-a but could also be 2-b) of the light guide 2 and configured to supply light into the light guide 2; and
   - an elongated planar light guide 4 arranged facing the elongated light guide 2 and configured to receive, through an inner surface 9 facing the light guide 2 (see Figure 3), the light rays output from a surface 8 of the light guide 2 to convey the received light on an outer surface 5 of the planar light guide 4 arranged, in use, towards the outside of the vehicle (an outline of the vehicle is indicated by 6 in Figure 1).

The primary emitting device, in the example the light guide, is typically manufactured by molding transparent plastic material and internally comprises shaped facets, so as to create a given trajectory for the output light rays. The planar light guide 4 is also manufactured by molding plastic material. A flat optics (not illustrated) or a sequence of reflectors (not represented) could be provided as an alternative to the light guide.

The section of the light guide 2 and the section of the planar light guide 4 are illustrated, by way of example, in Figure 3.

In particular, on a projection plane PR perpendicular to a longitudinal axis D of the vehicle on which, in use, the device 1 is installed, the following can be defined:
a first apparent distance L1-y which extends between two straight lines perpendicular to the projection plane PR and passing through the end portions of the optically active path L1 of the primary emitting device 2, in the example the elongated light guide 2 - the apparent distance represents the projection of the optically active curved path L1 on the plane PR;
a second apparent distance L2-y which extends between two straight lines perpendicular to the projection plane PR and passing through the end portions of the planar light guide 4;
the second apparent distance L2-y is greater than the first apparent distance L1-y.

According to the present invention, the primary emitting device 2 and the planar light guide 4 are configured so that the light produced by the primary emitting device projected onto the plane PR extends throughout the second apparent distance L2-y so that the outer surface 5 of the planar light guide 4 is perceived totally illuminated even though the distance L1-y is smaller than distance L2-y. This way, it is possible to completely illuminate the end portions of the planar light guide (see Figure 4), although the end portion 4-b of the planar light guide lacks a corresponding portion of the light guide arranged by its side. In any case, the outer surface 5 is perceived from the outside, at least from the front view of the vehicle, as illuminated in a spatially uniform manner.

Such effect is obtained by means of a particular shape of the light guide 2 and the planar light guide 4 which will be described in the following.

In particular, according to the present invention, the light guide 2 is configured such that:
a first section T1 (Figure 1) of the elongated light guide 2 comprising an end portion 2-b of the light guide 2 is configured to output light rays R extending parallel to one another along the longitudinal axis D of the vehicle 6 and perpendicular to the projection plane PR; and
a second section T2 of the light guide 2 comprising an end portion 2-a of the light guide is configured to output light rays extending along second directions L forming angles α relative to the vehicle axis D to illuminate the portion of the planar light guide 4-a arranged facing the second section T2 along its entire length.

The angle α forming the second direction L relative to the first one D has an increasing value towards the end portion 2-a of the light guide 2.

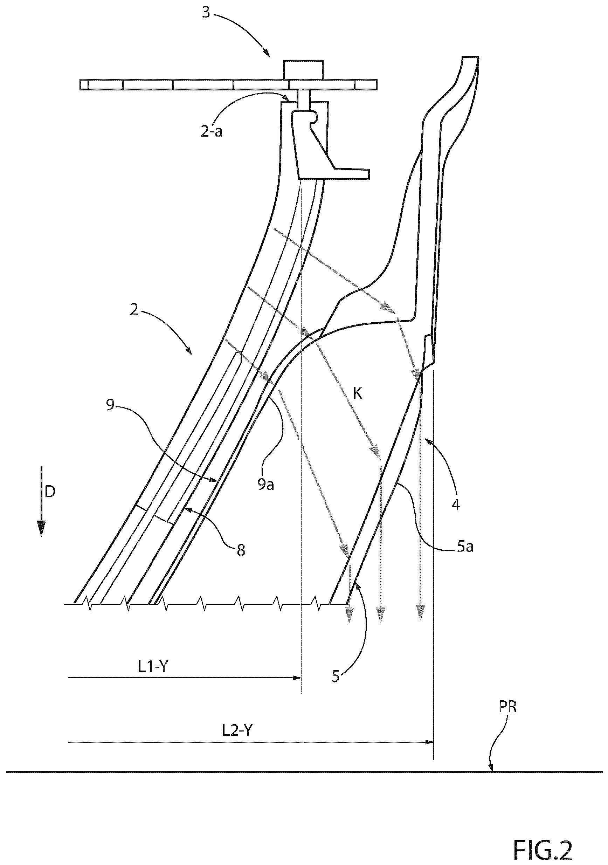

Furthermore, according to the present invention (see Figure 2), the end portion of the inner surface 9 facing the end portion has a curved profile so that the light rays which extend in the directions L are further deviated and extend along directions K forming an angle β smaller than the angle α relative to D.

Finally, the portion 5-a of the outer surface 5 of the planar light guide 4 is suitably shaped with known techniques (graining, or diffusive finishing, opaline finishing, film, or faceting) to redirect the output light (received from 9), so that the output light from the surface 5 is also parallel to D and the surface 5 is completely illuminated.

## Claims

1. A signaling device for a vehicle, in particular a motor vehicle, comprising:
a primary emitting device (2) which defines an optically active path (L1) that extends between a first end portion (2-a) and a second end portion (2-b);
at least one light-emitting source (3) operatively associated to the primary emitting device (2);
an elongated planar light guide (4) arranged facing the primary emitting device (2) configured to receive through an inner surface (9) thereof the light rays output from the primary emitting device (2) and to convey the input light on an outer surface (5) of the elongated planar light guide (4) arranged, in use, towards the outside of the vehicle, so as to illuminate the entire outer surface (5) of the elongated planar light guide (4), on a projection plane (PR) perpendicular to a longitudinal axis (D) of the vehicle on which, in use, the device (1) is installed and wherein the following can be defined: a first apparent distance (L1-y) which extends between two straight lines perpendicular to the projection plane (PR) and passing through the end portions of the optically active path (L1) of the primary emitting device (2); a second apparent distance (L2-y) which extends between two straight lines perpendicular to the projection plane (PR) and passing through the end portions of the planar light guide (4);
the second apparent distance (L2-y) is greater than the first apparent distance (L1-y),
wherein the primary emitting device (2) is configured so that: a first section (T1) of the primary emitting device (2) is configured to output light rays (R) that extend parallel to one another along the longitudinal axis of the vehicle (D); and at least a second section of the primary emitting device (2) is configured to emit light rays that extend along second directions (L) that form angles (α) relative to the longitudinal axis of the vehicle (D);
**characterized in that** the end portion of the inner surface (9) facing the first end portion (2-a) of the primary emitting device (2) has a curved profile configured so that the light rays that extend along the second directions (L) are further deviated and extend along directions (K) forming an angle (β) smaller than the angle (α) relative to the longitudinal axis of the vehicle (D), consequently the primary emitting device (2) and the planar light guide (4) being configured so that the light produced by the primary emitting device (2), conveyed by the elongated planar light guide (4) and projected onto the plane (PR) extends throughout the second apparent distance (L2-y), the outer surface (5) of the planar light guide (4) being so perceived from the outside as totally illuminated.

2. The device according to claim 1, wherein the portion (5-a) of the outer surface (5) of the planar light guide (4) arranged facing the second section (T2) is shaped to redirect the output light so that the output light from the surface (5) is also parallel to the direction of the longitudinal axis of the vehicle (D).

3. The device according to claim 2, wherein the portion (5-a) of the outer surface (5) of the planar light guide (4) arranged facing the second section (T2) is shaped by means of graining, or diffusive finishing, opaline finishing, film or faceting.

4. The device according to claim 1, wherein the angle (α) forming the second direction relative to the direction of the longitudinal axis of the vehicle (D) has an increasing value towards the first end portion (2-a) of the primary emitting device (2).

5. The device according to the preceding claim, wherein a primary emitting device (2) comprises one of the following: light guide; flat optics; or a sequence of reflectors.

## Patentansprüche

1. Signalvorrichtung für ein Fahrzeug, insbesondere ein Kraftfahrzeug, umfassend:
eine primäre Emissionsvorrichtung (2), die einen optisch aktiven Pfad (L1), der sich zwischen einem ersten Endabschnitt (2-a) und einem zweiten Endabschnitt (2-b) erstreckt, definiert;
mindestens eine Lichtemissionsquelle (3), die mit der primären Emissionsvorrichtung (2) wirkverknüpft ist;
ein länglicher planarer Lichtleiter (4), der der primären Emissionsvorrichtung (2) zugewandt angeordnet ist und konfiguriert ist, um durch eine Innenoberfläche (9) davon die Lichtstrahlen, die von der primären Emissionsvorrichtung (2) ausgegeben werden, zu empfangen und um das eingegebene Licht auf eine Außenoberfläche (5) des länglichen planaren Lichtleiters (4) zu leiten, die in Verwendung zu der Außenseite des Fahrzeugs hin angeordnet ist, um die gesamte Außenoberfläche (5) des länglichen planaren Lichtleiters (4) zu beleuchten, auf eine Projektionsebene (PR) senkrecht zu einer Längsachse (D) des Fahrzeugs, an dem in Verwendung die Vorrichtung (1) eingebaut ist, und wobei das Folgende definiert werden kann: ein erster scheinbarer Abstand (L1-y), der sich zwischen zwei geraden Linien senkrecht zu der Projektionsebene (PR) erstreckt und durch die Endabschnitte des optisch aktiven Pfads (L1) der primären Emissionsvorrichtung (2) verläuft; ein zweiter scheinbarer Abstand (L2-y), der sich zwischen zwei geraden Linien senkrecht zu der Projektionsebene (PR) erstreckt und durch die Endabschnitte des planaren Lichtleiters (4) verläuft;
wobei der zweite scheinbare Abstand (L2-y) größer als der erste scheinbare Abstand (L1-y) ist,
wobei die primäre Emissionsvorrichtung (2) konfiguriert ist, sodass: ein erster Bereich (T1) der primären Emissionsvorrichtung (2) konfiguriert ist, um Lichtstrahlen (R), die sich parallel zueinander entlang der Längsachse des Fahrzeugs (D) erstrecken, auszugeben; und mindestens ein zweiter Bereich der primären Emissionsvorrichtung (2) konfiguriert ist, um Lichtstrahlen zu emittieren, die sich entlang zweiter Richtungen (L), die Winkel (α) relativ zu der Längsachse des Fahrzeugs (D) bilden, erstrecken;
**dadurch gekennzeichnet, dass** der Endabschnitt der Innenoberfläche (9), der dem ersten Endabschnitt (2-a) der primären Emissionsvorrichtung (2) zugewandt ist, ein gekrümmtes Profil aufweist, das konfiguriert ist, sodass die Lichtstrahlen, die sich entlang der zweiten Richtungen (L) erstrecken, weiter abgelenkt werden und sich entlang Richtungen (K) erstrecken, die einen Winkel (β) bilden, der kleiner als der Winkel (α) relativ zu der Längsachse des Fahrzeugs (D) ist, wobei folglich die primäre Emissionsvorrichtung (2) und der planare Lichtleiter (4) konfiguriert sind, sodass das Licht, das durch die primäre Emissionsvorrichtung (2) erzeugt wird, durch den länglichen planaren Lichtleiter (4) geleitet und auf die Ebene (PR) projiziert wird, sich über den gesamten zweiten scheinbaren Abstand (L2-y) erstreckt, wobei die Außenoberfläche (5) des planaren Lichtleiters (4) so von außen als vollständig beleuchtet wahrgenommen wird.

2. Vorrichtung nach Anspruch 1, wobei der Abschnitt (5-a) der Außenoberfläche (5) des planaren Lichtleiters (4), dem zweiten Bereich (T2) zugewandt angeordnet, geformt ist, um das ausgegebene Licht umzuleiten, sodass das ausgegebene Licht von der Oberfläche (5) ebenso parallel zu der Richtung der Längsachse des Fahrzeugs (D) ist.

3. Vorrichtung nach Anspruch 2, wobei der Abschnitt (5-a) der Außenoberfläche (5) des planaren Lichtleiters (4), dem zweiten Bereich (T2) zugewandt angeordnet, mittels Körnung oder diffusiver Oberflächenbehandlung, Opalin-Oberflächenbehandlung, Folie oder Facettierung geformt ist.

4. Vorrichtung nach Anspruch 1, wobei der Winkel (α), der die zweite Richtung relativ zu der Richtung der Längsachse des Fahrzeugs (D) bildet, einen zunehmenden Wert zu dem ersten Endabschnitt (2-a) der primären Emissionsvorrichtung (2) hin aufweist.

5. Vorrichtung nach dem vorstehenden Anspruch, wobei eine primäre Emissionsvorrichtung (2) eines des Folgenden umfasst: Lichtleiter; Flachoptik; oder eine Sequenz von Reflektoren.

## Revendications

1. Dispositif de signalisation pour un véhicule, en particulier un véhicule à moteur, comprenant :
un dispositif émetteur primaire (2) qui définit une trajectoire optiquement active (L1) qui s'étend entre une première partie d'extrémité (2-a) et une seconde partie d'extrémité (2-b) ;
au moins une source émettrice de lumière (3) associée de manière fonctionnelle au dispositif émetteur primaire (2) ;
un guide de lumière plan (4) allongé agencé faisant face au dispositif émetteur primaire (2) conçu pour recevoir, à travers une surface interne (9) de celui-ci, les rayons de lumière émis par le dispositif émetteur primaire (2) et pour transmettre la lumière d'entrée sur une surface externe (5) du guide de lumière plan (4) allongé agencé, en utilisation, vers l'extérieur du véhicule, de manière à éclairer toute la surface externe (5) du guide de lumière plan (4) allongé, sur un plan de projection (PR) perpendiculaire à un axe longitudinal (D) du véhicule sur lequel, en utilisation, le dispositif (1) est installé et dans lequel peuvent être définis les éléments suivants : une première distance apparente (L1-y) qui s'étend entre deux lignes droites perpendiculaires au plan de projection (PR) et passant à travers les parties d'extrémité de la trajectoire optiquement active (L1) du dispositif émetteur primaire (2) ; une seconde distance apparente (L2-y) qui s'étend entre deux lignes droites perpendiculaires au plan de projection (PR) et passant à travers les parties d'extrémité du guide de lumière plan (4) ;
la seconde distance apparente (L2-y) est supérieure à la première distance apparente (L1-y),
dans lequel le dispositif émetteur primaire (2) est configuré de sorte que : une première section (T1) du dispositif émetteur primaire (2) est conçue pour délivrer des rayons de lumière (R) qui s'étendent parallèlement l'un à l'autre le long de l'axe longitudinal du véhicule (D) ; et au moins une seconde section du dispositif émetteur primaire (2) est configurée pour émettre des rayons de lumière qui s'étendent le long de secondes directions (L) qui forment des angles (α) par rapport à l'axe longitudinal du véhicule (D) ;
**caractérisé en ce que** la partie d'extrémité de la surface interne (9) faisant face à la première partie d'extrémité (2-a) du dispositif émetteur primaire (2) a un profil incurvé conçu de sorte que les rayons de lumière qui s'étendent le long des secondes directions (L) sont en outre déviés et s'étendent le long de directions (K) formant un angle (β) inférieur à l'angle (α) par rapport à l'axe longitudinal du véhicule (D), par conséquent, le dispositif émetteur primaire (2) et le guide de lumière plan (4) étant conçus de sorte que la lumière produite par le dispositif émetteur primaire (2), transmise par le guide de lumière plan (4) allongé et projetée sur le plan (PR) s'étend sur toute la seconde distance apparente (L2-y), la surface externe (5) du guide de lumière plan (4) étant ainsi perçue de l'extérieur comme totalement éclairée.

2. Dispositif selon la revendication 1, dans lequel la partie (5-a) de la surface externe (5) du guide de lumière plan (4) agencée faisant face à la seconde section (T2) est formée pour rediriger la lumière de sortie de sorte que la lumière de sortie de la surface (5) est également parallèle à la direction de l'axe longitudinal du véhicule (D).

3. Dispositif selon la revendication 2, dans lequel la partie (5-a) de la surface externe (5) du guide de lumière plan (4) agencée faisant face à la seconde section (T2) est formée au moyen d'un grainage, ou d'une finition diffusive, d'une finition opaline, d'un film ou d'un facettage.

4. Dispositif selon la revendication 1, dans lequel l'angle (α) formant la seconde direction par rapport à la direction de l'axe longitudinal du véhicule (D) a une valeur croissante vers la première partie d'extrémité (2-a) du dispositif émetteur primaire (2).

5. Dispositif selon la revendication précédente, dans lequel un dispositif émetteur primaire (2) comprend l'un des éléments suivants : guide de lumière ; optique plate ; ou une séquence de réflecteurs.
